# FASCICULE DE BREVET EUROPEEN

(11) **EP 0 826 702 B1**
(45) Date de publication et mention de la délivrance du brevet: **12.11.2003**
(21) Numéro de dépôt: 97401950.7
(22) Date de dépôt: 19.08.1997
(51) Int. Cl.: C08F 14/06, C08F 259/04, C08L 27/06

(54) **Latex à deux populations de particules à base de polymères de chlorure de vinyle, ses procédés de fabrication et ses applications**
Latex mit zwei Korngrössen aus Vinylchloridpolymeren, Verfahren zu ihrer Herstellung und ihre Verwendungen
Latex with two-particle size populations of vinylchloride polymers, manufacturing method thereof and uses

(30) Priorité: 27.08.1996 FR 9610492
(43) Date de publication de la demande: 04.03.1998
(73) Titulaire: Atofina, 92800 Puteaux (FR)
(72) Inventeur: Espiard, Philippe, 60140 Liancourt (FR); Peres, Richard, 04600 Saint Auban sur Durance (FR); Ernst, Benoît, 27170 Beaumont-le-Rocher (FR)

(56) Documents cités:
- EP-A- 0 025 561
- EP-A- 0 270 436
- FR-A- 1 318 956
- FR-A- 2 286 152
- FR-A- 2 309 569
- FR-A- 2 344 579
- US-A- 5 151 476

## Description

La présente invention concerne un latex contenant deux populations de particules de polymères à base de chlorure de vinyle. Elle a également pour objet les procédés d'obtention de ce latex et ses applications.

On connaît des latex bipopulés de particules de polymères à base de chlorure de vinyle, présentant respectivement des diamètres moyens compris entre 0,4 et 2,5 µm et entre 0,08 et 1 µm, dans un rapport des diamètres compris entre 1 et 20 et un rapport pondéral compris entre 0,1 et 10. Ces latex sont préparés par polymérisation en microsuspension ensemencée du ou des monomère(s) correspondant(s), en présence d'un premier polymère d'ensemencement dont les particules renferment au moins un initiateur organosoluble, d'un deuxième polymère d'ensemencement, d'un agent tensioactif et d'un sel métallique soluble en quantité telle que le rapport molaire du sel métallique sur l'initiateur organosoluble est compris entre 0,1 et 10 (FR 2 309 569). La polymérisation est effectuée en l'absence d'addition complémentaire d'initiateur.

Par ailleurs, le brevet US 5 151 476 nous enseigne que le rapport molaire sel métallique / initiateur organosoluble peut être réduit, et que la polymérisation peut être même effectuée en l'absence de sel métallique.

Les latex bipopulés connus à ce jour, en particulier ceux préparés par polymérisation en microsuspension ensemencée, conduisent soit à des plastisols fluides, soit à des mousses de bonne qualité cellulaire. Jusqu'à la présente demande, il n'était pas possible, à partir d'un même latex, d'obtenir à la fois des plastisols fluides et des mousses de haute qualité cellulaire .

La demanderesse a maintenant découvert un latex contenant deux populations de particules de polymères à base de chlorure de vinyle, présentant respectivement des diamètres moyens compris entre 0,9 et 1,3 µm et entre 0,15 et 0,3 µm, dans des proportions telles que le rapport pondéral, de la population de diamètre moyen inférieur sur celle de diamètre moyen supérieur, est compris entre 0,4 et 0,7.

Par polymères à base de chlorure de vinyle, on entend les homo-et copolymères, ces derniers contenant au moins 50 % en poids de chlorure de vinyle et au moins un monomère copolymérisable avec le chlorure de vinyle. Les monomères copolymérisables sont ceux généralement employés dans les techniques classiques de copolymérisation du chlorure de vinyle. On peut citer les esters vinyliques des acides mono- et poly-carboxyliques, tels que acétate, ; propionate, benzoate de vinyle ; les acides insaturés mono- et poly-carboxyliques, tels que acrylique, méthacrylique, maléique, fumarique, itaconique, ainsi que leurs esters aliphatiques, cyclo-aliphatiques, aromatiques, leurs amides, leurs nitriles ; les halogénures d'alkyle, de vinyle, de vinylidène ; les alkylvinyl éthers et les oléfines.

Les polymères à base de chlorure de vinyle préférés sont les homopolymères de chlorure de vinyle.

Le latex, selon la présente invention, peut être obtenu par polymérisation en microsuspension ensemencée du ou des monomère(s) correspondant(s) en présence d'un premier polymère d'ensemencement (P1), dont les particules renferment au moins un initiateur organosoluble, d'un deuxième polymère d'ensemencement (P2), dont les particules ont un diamètre moyen inférieur à celui des particules du premier polymère d'ensemencement (P1), d'eau, d'un émulsifiant anionique, d'un sel métallique soluble en quantité telle que le rapport molaire sel métallique / initiateur organosoluble est inférieur à 0,09 et en présence d'un agent réducteur.

Ce procédé est caractérisé en ce que l'agent réducteur est le métabisulfite d'un métal alcalin et de préférence le métabisulfite de potassium. La quantité d'agent réducteur utilisé est , de préférence, comprise entre 30 et 120 ppm par rapport au(x) monomère(s), mis en jeu.

Le premier polymère d'ensemencement (P1), nécessaire à la polymérisation, peut être préparé selon les techniques classiques de polymérisation en microsuspension. Il est utilisé sous forme d'une dispersion aqueuse de ses particules, dont le diamètre moyen est, de préférence, compris entre 0,4 et 0,7 µm.

Un moyen de préparer ce polymère d'ensemencement consiste à mettre en oeuvre de l'eau, du chlorure de vinyle seul ou associé avec un ou plusieurs monomère(s) copolymérisable(s), un initiateur organosoluble et un émulsifiant anionique éventuellement associé à un émulsifiant non ionique. Le ou les monomères sont finement dispersés dans l'eau à l'aide d'un moyen mécanique énergique tel que, par exemple, moulin colloïdal, pompe rapide, agitateur à vibrations, appareil à ultrasons. La microsuspension obtenue est alors chauffée sous pression autogène et sous agitation modérée à une température généralement comprise entre 30 et 65 ° C. Après la chute de la pression, la réaction est arrêtée et le ou les monomères non transformés sont dégazés.

Les initiateurs organosolubles, à mettre en oeuvre dans la préparation du premier polymère d'ensemencement (P1), sont représentés par les peroxydes organiques, tels que les peroxydes de lauroyle, de décanoyle, de caproyle, le diéthylperacétate de tertiobutyle, le percarbonate de diéthylhexyle, le peroxyde de diacétyle et le dicétyl peroxyde carbonate.

Le choix de l'initiateur organosoluble dépend de sa vitesse de décomposition à la température de réaction adoptée. En effet, ledit initiateur doit être suffisamment réactif pour permettre de réaliser la polymérisation d'ensemencement, dans des temps compris entre 4 et 12 heures et avec des doses normales, de l'ordre de 0,1 à 3 % en poids par rapport au monomère ou au mélange de monomères, et sa vitesse de décomposition doit être telle que la quantité d'initiateur décomposée dans la préparation du polymère d'ensemencement ne dépasse pas la moitié de la quantité d'initiateur mis en oeuvre. Pour cela, il est donc nécessaire de choisir un initiateur dont la demi-durée de vie est telle que la proportion d'initiateur détruit, lors de la préparation du polymère d'ensemencement, est comprise entre 5 et 50 % en poids de la totalité de l'initiateur mis en oeuvre.

De plus l'initiateur organosoluble choisi, doit être insoluble dans l'eau. Avantageusement, les peroxydes de lauroyle sont choisis.

Dans le cas où l'on emploie plusieurs initiateurs organosolubles, on a avantage à les choisir de réactivité différente; les initiateurs les plus réactifs agissent principalement au cours de la préparation du polymère d'ensemencement, alors que les initiateurs les moins réactifs agissent surtout au cours de la polymérisation ensemencée.

Le deuxième polymère d'ensemencement (P2) se présente sous forme d'une dispersion aqueuse de particules de polymère, dont le diamètre moyen est de préférence compris entre 0,1 et 0,14 µm.

Cette dispersion de particules peut être obtenue par les techniques classiques de polymérisation en microsuspension ou en émulsion.

La préparation du deuxième polymère d'ensemencement (P2), lorsqu'elle est effectuée par polymérisation en microsuspension, est réalisée ainsi qu'il est décrit précédemment, mais l'homogénéisation est plus poussée.

La préparation du deuxième polymère d'ensemencement (P2) est de préférence effectuée par polymérisation en émulsion, qui consiste à mettre en oeuvre de l'eau, du chlorure de vinyle seul ou associé à un ou plusieurs monomère(s) copolymérisable(s), un initiateur hydrosoluble et un émulsifiant anionique éventuellement associé à un émulsifiant non ionique.

Le mélange réactionnel est chauffé sous pression autogène et agitation modérée à une température comprise entre 30 et 65° C. Après chute de pression, la réaction est arrêtée et le ou les monomères non transformés sont dégazés.

Les initiateurs hydrosolubles nécessaires à la préparation du deuxième polymère d'ensemencement (P2) sont généralement représentés par l'eau oxygénée, les persulfates de métaux alcalins ou d'ammonium associés ou non à des réducteurs hydrosolubles, tels que sulfites ou bisulfites de métaux alcalins. Les quantités utilisées, très variables, dépendent du système initiateur choisi et sont juste suffisantes pour assurer la polymérisation dans des temps raisonnables.

Dans le procédé selon la présente invention, la vitesse de polymérisation est accélérée par l'action du sel métallique hydrosoluble et de l'agent réducteur sur l'initiateur organosoluble. Le sel métallique est mis en oeuvre en quantité, telle que le rapport molaire sel métallique / initiateur est, de préférence, compris entre 0,001 et 0,09 et plus particulièrement entre 0,001 et 0,03. Le métal est, en général, choisi parmi le fer, le cuivre, le cobalt, le nickel, le zinc, l'étain, le titane, le vanadium, le manganèse, le chrome et l'argent. Le cuivre est avantageusement choisi.

La présence de l'émulsifiant anionique, éventuellement associé à au moins un émulsifiant non ionique, améliore la stabilité de la microsuspension. Le ou les émulsifiants peut ou peuvent être ajouté(s) dans le milieu réactionnel, avant et/ ou après et/ou en cours de polymérisation. Les émulsifiants anioniques sont, de préférence, choisis parmi les savons d'acides gras, les alkylsulfates, les alkylsulfates éthoxylés, les alkylsulfonates, les alkylarylsulfonates, les vinylsulfonates, les allylsulfonates, les alkyl sulfosuccinates, les alkylphosphates alcalins. Les émulsifiants non ioniques préférés, sont les polycondensats d'oxyde d'éthylène ou de propylène sur divers composés organiques hydroxylés.

Les quantités d'émulsifiant peuvent représenter jusqu'à 3 % en poids du ou des monomère(s), mis en jeu.

La quantité d'eau nécessaire à la polymérisation, selon l'invention, est telle que la concentration initiale en polymères d'ensemencement, plus le ou les monomère(s) mis en jeu, soit comprise entre 20 et 80 % et de préférence entre 45 et 75 % en poids par rapport au mélange réactionnel.

En outre, la polymérisation ensemencée selon la présente invention peut être effectuée en présence d'un ou de plusieurs initiateur(s) hydrosoluble(s), choisis parmi l'eau oxygénée et les persulfates de métaux alcalins ou d'ammonium. Le persulfate d'ammonium est avantageusement choisi.

Le ou les initiateur(s) hydrosoluble(s) est ou sont, de préférence, introduit(s) dans le milieu réactionnel avant le début de la polymérisation ensemencée. La quantité d'initiateur(s) hydrosoluble(s) utilisée est, de préférence, comprise entre 10 et 100 ppm par rapport au(x) monomère(s), mis en jeu.

La température de polymération ensemencée est, en général, comprise entre 30 et 80° C et la durée de polymérisation est comprise entre 30 minutes et 12 heures et de préférence comprise entre 1 et 8 heures.

Un autre mode de préparation du latex, conforme à la présente invention, consiste à choisir l'agent réducteur parmi les acides alkylphosphoriques, les lactones, les cétones, les carbazones et les acides mono-ou poly-carboxyliques tels que l'acide ascorbique ou ses dérivés, et à opérer en présence d'au moins un initiateur hydrosoluble, de préférence le persulfate d'ammonium. L'acide ascorbique est avantageusement choisi comme agent réducteur.

Selon les deux premiers modes de préparation, la quantité de deux polymères d'ensemencement utilisée est telle que le rapport massique du deuxième polymère d'ensemencement (P2) sur celui de (P1) est de préférence compris entre 0,7 et 1,8.

Quel que soit le mode de préparation utilisé, les latex ainsi préparés sont ensuite avantageusement séchés par atomisation, et les poudres résultantes sont particulièrement aptes à la préparation des plastisols fluides et également à des mousses ayant une très bonne qualité cellulaire. De plus les mousses, ainsi préparées, présentent un niveau de blancheur élevé et de préférence de l'ordre de 45 ( norme ASTM E 313/73 D25/2W).

### Partie expérimentale

### (A) Préparation du polymère d'ensemencement (P1)

Dans un réacteur de 800 litres, agité à 35 tours/min et régulé à 15° C, on introduit successivement :
- 375 kg d'eau
- 5 l de la solution tampon contenant 426 g de dihydrogénophosphate de potassium et 117 g de soude pure
- 11 g de paraquinone en poudre
- 6 kg de peroxyde de lauroyle
- 320 kg de chlorure de vinyle
- 48 kg d'une solution aqueuse à 10 % en poids de dodécylbenzène sulfonate de sodium,
le réacteur étant mis sous vide juste avant l'introduction du chlorure de vinyle.

On réalise ensuite une fine dispersion du chlorure de vinyle dans le milieu aqueux à une température inférieure ou égale à 35° C, en agitant le dit milieu, pendant 105 minutes, à 5 500 tours/min.

Puis, on porte le milieu réactionnel à la température de polymérisation visée de 45° C sous pression autogène, la vitesse d'agitation étant de 30 tours/min. Au cours de la polymérisation, on introduit en continu la paraquinone avec un débit constant de 10,5 g/h.

Après la chute de pression jusqu'à la valeur de 3,5 bars, c'est-à-dire après 8 heures, on dégaze le chlorure de vinyle qui n'a pas réagi. On obtient ainsi un latex dont les particules ont un diamètre moyen d'environ 0,55 µm et renferment environ 2 % en poids par rapport au polymère, de peroxyde de lauroyle.

### (B) Préparation du polymère d'ensemencement (P2)

Dans un réacteur de 800 litres muni d'un agitateur on introduit
415 Kg d'eau
1,25 Kg d'acide laurique et
0,8 Kg de soude pure.

On porte ensuite le mélange à la température de 65°C et on le maintient pendant une heure à cette température. Le mélange est alors refroidi jusqu'à 55°C, puis le réacteur est mis sous vide. Tout en maintenant la température du milieu à 55°C, on introduit ensuite 400 Kg de chlorure de vinyle, 4 litres d'une solution aqueuse contenant 109 g de persulfate d'ammonium et puis on ajoute en continu avec un débit constant de 3 l/h, une solution aqueuse contenant dans 30 litres d'eau, 0,72 g de sulfate de cuivre, 18 g de metabisulfite de potassium et 0,54 litre de l'ammoniaque 12 N. Trois heures après l'introduction du persulfate, on ajoute pendant 5 heures en continu à 8 l/h dans le milieu réactionnel, une solution aqueuse contenant 4,56 Kg de dodécylbenzène sulfonate de sodium pour 40 litres d'eau. Lorsque la pression interne est de 4,5 bars, on arrête la réaction par refroidissement rapide et on introduit ensuite une solution aqueuse de dodécylbenzène sulfonate de sodium contenant 7,28 Kg d'extrait sec. Les particules de polymères obtenus ont un diamètre moyen voisin de 0,11 µm.

### Exemple 1 comparatif

Dans un réacteur de 800 litres, muni d'un agitateur et préalablement mis sous vide, on introduit successivement par aspiration :
- 400 kg d'eau déminéralisée
- 80 g de dihydrogénophosphate de potassium
- 0,63 g de sulfate de cuivre (CuSO₄. 5H₂O)
- 15,44 kg considéré à l'état sec du latex de polymère d'ensemencement P1
- 9,08 kg considéré à l'état sec du latex de polymère d'ensemencement P2.

Le réacteur à température ambiante, sous agitation et contenant le mélange aqueux est de nouveau mis sous vide. On introduit alors 400 kg de chlorure de vinyle, puis on porte le milieu réactionnel à la température visée de 58° C. Dès que la température du milieu atteint 55° C, on introduit en continu une solution aqueuse d'acide ascorbique suivi une heure après, d'une solution aqueuse de dodécyl benzène sulfonate de sodium.

Lorsque la pression du milieu est de 4 bars, soit au bout de 6 heures de polymérisation, on arrête l'introduction des solutions aqueuses, le chauffage et on refroidit le réacteur.

La quantité totale d'acide ascorbique et de dodécylbenzène sulfonate de sodium introduite est de 23 g et 3,2 Kg respectivement.

On obtient un latex dont la concentration en polymère est de 47 %. L'analyse granulométrique montre que le polymère est formé de deux populations dont les particules ont respectivement des diamètres moyens de 0,23 µm et 1,09 µm. Les particules fines représentent 15,5 % en poids du polymère.

### Exemple 2 comparatif

On opère comme décrit à l'exemple 1, sauf que la durée de polymérisation est de 8 heures et que la quantité d'acide ascorbique introduite est de 29 g.

### Exemple 3

On opère comme décrit à l'exemple 1, sauf que l'on utilise une solution aqueuse de métabisulfite de potassium à la place d'acide ascorbique.

### Exemple 4

On opère comme décrit à l'exemple 2 sauf que l'on introduit 15,6 kg considéré à l'état sec du latex de polymère d'ensemencement (P2). La durée de polymérisation est de 11 heures et la quantité d'acide ascorbique introduite est de 35 g.

### Exemple 5

On opère comme décrit à l'exemple 2 sauf que l'on introduit 22 kg considéré à l'état sec du latex de polymère d'ensemencement (P2). La durée de polymérisation est de 10 heures et la quantité d'acide ascorbique introduite est de 32 g.

### Exemple 6

On opère comme décrit à l'exemple 2, sauf que l'on introduit 19,5 kg considéré à l'état sec du latex de polymère d'ensemencement (P2), suivi de 12 g de persulfate d'ammonium. La durée de polymérisation est de 7 heures et la quantité d'acide ascorbique introduite est de 26 g.

### Exemple 7

On opère comme décrit à l'exemple 6, sauf que l'on introduit 21,7 kg considéré à l'état sec du latex de polymère d'ensemencement (P2).

### Exemple 8

On opère comme décrit à l'exemple 7, sauf que l'on introduit 18 g de persulfate d'ammonium et que la durée de polymérisation est de 6 heures.

### Exemple 9

On opère comme décrit à l'exemple 6 sauf qu'à la place d'une solution aqueuse d'acide ascorbique, on utilise une solution aqueuse de métabisulfite de potassium.

### Exemple 10

On opère comme décrit à l'exemple 9 sauf que l'on introduit 13,7 kg considéré à l'état sec du latex de polymère d'ensemencement (P2).

Les caractéristiques du latex obtenu à partir des exemples 2 à 10 sont reportées dans le tableau 1.

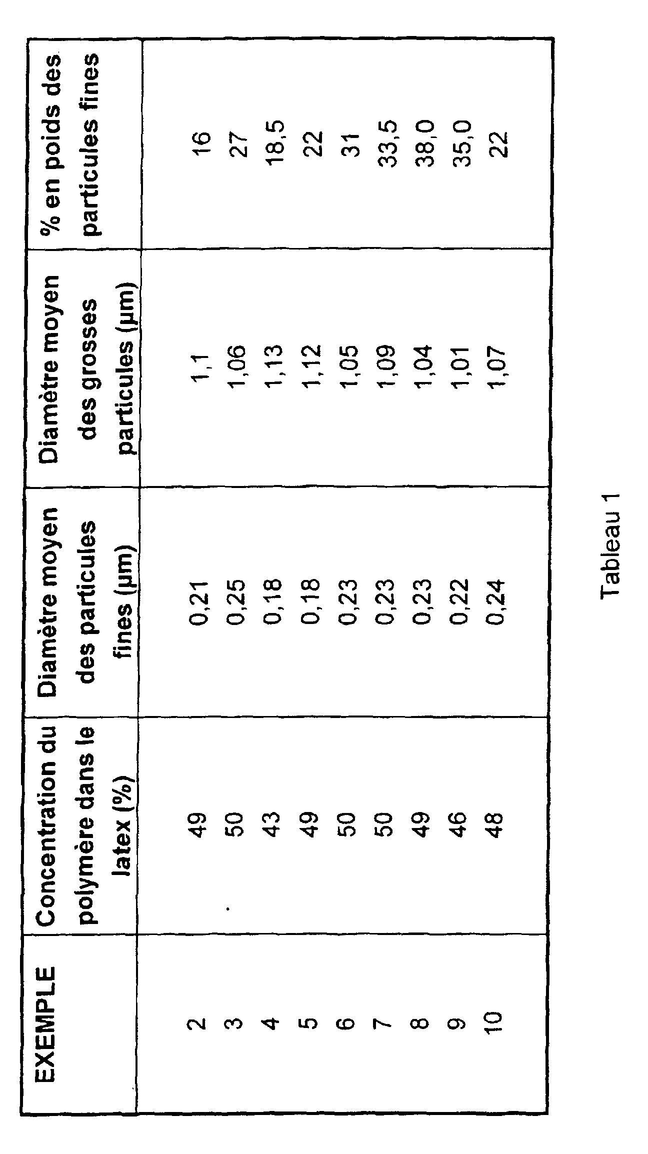

### Préparation du plastisol

100 parties de la poudre, obtenue après atomisation de latex préparé selon les exemples précédents, sont ensuite mélangées avec 60 parties du dioctyl phtalate, 2,5 parties d'un agent d'expansion (azodicarbonamide) et 2 parties d'un activateur.

La viscosité du plastisol ainsi préparé, est mesurée à 25° C au bout d'une demi-heure et 24 heures à l'aide d'un rhéomètre du type Brookfield.

### Préparation de la mousse

Une partie du plastisol préparé est enduite sur un support, puis placée dans un four pendant 150 minutes à 195° C.

La qualité cellulaire de mousse, ainsi obtenue, est évaluée sur une échelle de - 4 à + 4.

La valeur - 4 correspond à une mousse ayant des cellules ouvertes, très grosses et hétérogènes, tandis que la valeur +4 correspond à une mousse à cellules fines fermées et très homogènes.

Les caractéristiques du plastisol et de la mousse sont reportées dans le tableau 2.

De plus l'indice de blancheur, mesuré suivant la norme ASTM E 313/73 D25/2W, des mousses obtenues à partir des latex selon les exemples 3 et 9 sont de 45,8 et 46,4 respectivement, alors que celle préparée à partir du latex de l'exemple 1 est de 39 seulement.

**Tableau 2**

| **Exemple** | **Viscosité 1/2 h (poises)** | **Viscosité 24 h (poises)** | **Qualité cellulaire** |
|---|---|---|---|
| 1 | 35 | 40 | + 2 |
| 7 | 37 | 47 | + 3 |
| 9 | 37 | 40 | + 3 |

## Revendications

1. Procédé d'obtention d'un latex contenant deux populations de particules d'homo- ou co-polymère du chlorure de vinyle, qui consiste à polymériser en microsuspension le ou les monomère(s) correspondant(s) en présence d'un premier polymère d'ensemencement (P1), dont les particules renferment au moins un initiateur organosoluble, d'un deuxième polymère d'ensemencement (P2), dont les particules ont un diamètre moyen inférieur à celui des particules du premier polymère d'ensemencement (P1), d'eau, d'un émulsifiant anionique, d'un sel métallique soluble en quantité telle que le rapport molaire sel métallique/initiateur organosoluble est inférieur à 0,09 et en présence d'un agent réducteur, est **caractérisé en ce que** l'agent réducteur est le métabisulfite d'un métal alcalin.

2. Procédé d'obtention d'un latex contenant deux populations de particules d'homo- ou co-polymère du chlorure de vinyle, qui consiste à polymériser en microsuspension le ou les monomère(s) correspondant(s) en présence d'un premier polymère d'ensemencement (P1), dont les particules renferment au moins un initiateur organosoluble, d'un deuxième polymère d'ensemencement (P2), dont les particules ont un diamètre moyen inférieur à celui des particules du premier polymère d'ensemencement (P1), d'eau, d'un émulsifiant anionique, d'un sel métallique soluble en quantité telle que le rapport molaire sel métallique/initiateur organosoluble est inférieur à 0,09 et en présence d'un agent réducteur, est **caractérisé en ce que** l'on opère en présence d'au moins un initiateur hydrosoluble.

3. Procédé selon la revendication 2 **caractérisé en ce que** l'initiateur hydrosoluble est le persulfate d'ammonium.

4. Procédé selon l'une des revendications 1 à 3 **caractérisé en ce que** le rapport pondéral du deuxième polymère d'ensemencement sur le premier polymère d'ensemencement est compris entre 0,7 et 1,8.

5. Procédé selon l'une des revendications 2 à 4 **caractérisé en ce que** l'agent réducteur est l'acide ascorbique ou le métabisulfite d'un métal alcalin.

6. Plastisols à base de latex obtenu suivant l'une des revendications 1 à 5.

7. Mousse à base de plastisols selon la revendication 6 **caractérisée par** une qualité cellulaire améliorée.

## Patentansprüche

1. Verfahren zur Herstellung eines Latex, der zwei Partikelverteilungen eines Homo- oder Copolymers des Vinylchlorid enthält, das darin besteht, in Mikrosuspension das entsprechende Monomer oder die entsprechenden Monomere in Gegenwart eines ersten Impfpolymers (P1), dessen Partikel mindestens einen in organischen Medien löslichen Initiator enthalten, eines zweiten Impfpolymers (P2), dessen Partikel einen mittleren Durchmesser aufweisen, der unter dem Durchmesser der Partikel des ersten Impfpolymers (P1) liegt, von Wasser, eines anionischen Emulgators, eines löslichen Metallsalzes, das in solchen Mengen verwendet wird, dass das Molverhältnis Metallsalz/in organischen Medien löslicher Initiator unter 0,09 liegt, und eines Reduktionsmittels zu polymerisieren, **dadurch gekennzeichnet, dass** es sich bei dem Reduktionsmittel um ein Alkalimetabisulfit handelt.

2. Verfahren zur Herstellung eines Latex, der zwei Partikelverteilungen eines Homo- oder Copolymers des Vinylchlorid enthält, das darin besteht, in Mikrosuspension das entsprechende Monomer oder die entsprechenden Monomere in Gegenwart eines ersten Impfpolymers (P1), dessen Partikel mindestens einen in organischen Medien löslichen Initiator enthalten, eines zweiten Impfpolymers (P2), dessen Partikel einen mittleren Durchmesser aufweisen, der unter dem Durchmesser der Partikel des ersten Impfpolymers (P1) liegt, von Wasser, eines anionischen Emulgators, eines löslichen Metallsalzes, das in solchen Mengen verwendet wird, dass das Molverhältnis Metallsalz/in organischen Medien löslicher Initiator unter 0,09 liegt, und eines Reduktionsmittels zu polymerisieren, **dadurch gekennzeichnet, dass** in Gegenwart mindestens eines wasserlöslichen Initiators gearbeitet wird.

3. Verfahren nach Anspruch 2, **dadurch gekennzeichnet, dass** der wasserlösliche Initiator das Ammoniumpersulfat ist.

4. Verfahren nach einem der Ansprüche 1 bis 3, **dadurch gekennzeichnet, dass** das Gewichtsverhältnis des zweiten Impfpolymers und des ersten Impfpolymers im Bereich von 0,7 bis 1,8 liegt.

5. Verfahren nach einem der Ansprüche 2 bis 4, **dadurch gekennzeichnet, dass** es sich bei dem Reduktionsmittel um Ascorbinsäure oder ein Alkalimetabisulfit handelt.

6. Plastisole auf der Basis eines nach einem der Ansprüche 1 bis 5 hergestellten Latex.

7. Schaum auf der Basis von Plastisolen nach Anspruch 6, **dadurch gekennzeichnet, dass** sie eine bessere Zellqualität aufweisen.

## Claims

1. Process for producing a latex containing two populations of particles of homo- or copolymer of vinyl chloride, which consists in polymerizing, under microsuspension conditions, the corresponding monomer or monomers in the presence of a first seeding polymer (P1), the particles of which contain at least one organosoluble initiator, of a second seeding polymer (P2), the particles of which have a mean diameter less than that of the particles of the first seeding polymer (P1), of water, of an anionic emulsifier, of a soluble metal salt, in an amount such that the metal salt/organosoluble initiator molar ratio is less than 0.09, and of a reducing agent, is **characterized in that** the reducing agent is the metabisulphite of an alkali metal.

2. Process for producing a latex containing two populations of particles of homo- or copolymer of vinyl chloride, which consists in polymerizing, under microsuspension conditions, the corresponding monomer or monomers in the presence of a first seeding polymer (P1), the particles of which contain at least one organosoluble initiator, of a second seeding polymer (P2), the particles of which have a mean diameter less than that of the particles of the first seeding polymer (P1), of water, of an anionic emulsifier, of a soluble metal salt, in an amount such that the metal salt/organosoluble initiator molar ratio is less than 0.09, and of a reducing agent, is **characterized in that** the reaction is carried out in the presence of at least one water-soluble initiator.

3. Process according to Claim 2, **characterized in that** the water-soluble initiator is ammonium persulphate.

4. Process according to one of Claims 1 to 3, **characterized in that** the ratio by weight of the second seeding polymer to the first seeding polymer is between 0.7 and 1.8.

5. Process according to one of Claims 2 to 4, **characterized in that** the reducing agent is ascorbic acid or the metabisulphite of an alkali metal.

6. Plastisols based on the latex obtained according to one of Claims 1 to 5.

7. Foam based on plastisols according to Claim 6, **characterized by** an improved cellular quality.
